# EUROPÄISCHE PATENTSCHRIFT

(11) **EP 2 183 554 B1**
(45) Veröffentlichungstag und Bekanntmachung des Hinweises auf die Patenterteilung: **16.04.2014**
(21) Anmeldenummer: 08784261.3
(22) Anmeldetag: 27.06.2008
(51) Int. Cl.: G01G 19/44

(54) **LIEGEVORRICHTUNG**
PATIENT BED
DISPOSITIF DE SUPPORT POUR POSITION COUCHÉE

(30) Priorität: 30.08.2007 DE 102007041243; 19.10.2007 DE 102007050485
(43) Veröffentlichungstag der Anmeldung: 12.05.2010
(73) Patentinhaber: Soehnle Professional GmbH & Co. KG, 71540 Murrhardt (DE)
(72) Erfinder: GERSTER, Stephan, 53343 Wachtberg-Pech (DE); SCHURR, Michael, 71540 Murrhardt (DE); STAHL, Albrecht, 71560 Sulzbach (DE)
(74) Vertreter: Hoffmann, Jürgen
(86) Internationale Anmeldenummer: PCT/DE2008/001060
(87) Internationale Veröffentlichungsnummer: WO 2009/026865

(56) Entgegenhaltungen:
- WO-A-2005/059488
- WO-A-2007/042960
- WO-A2-2004/021952
- DE-U1- 29 703 276
- US-A- 4 869 266
- US-A- 5 173 977

## Beschreibung

Die Erfindung betrifft eine Liegevorrichtung, insbesondere Bett oder Liege, welche an einem Ende und/oder auf einer Traverse mittels eines Drehlagers um eine horizontale Achse drehbar gelagert ist.

Liegevorrichtungen der eingangs genannter Art existieren in den unterschiedlichsten Ausgestaltungen und Formen. Beispielsweise ist aus der WO 2007/042960 A1 eine Liegevorrichtung der eingangs genannten Art bekannt. Die bekannte Liegevorrichtung weist ein Untergestell und einen auf dem Untergestell angeordneten Rahmen auf. Zwischen dem Rahmen und dem Untergestell sind Sensoreinheiten mit Kraftsensoren angeordnet. Mit den Sensoreinheiten kann das Gewicht einer auf der Liegevorrichtung befindlichen Person bestimmt werden.

Die bekannten Sensoreinheiten weisen Dehnungssensoren auf, die in einem zylindrischen Schutzbehälter angeordnet sind.

Bei der bekannten Liegevorrichtung ist problematisch, dass die Sensoreinheiten zur Bestimmung des Gewichts einer auf der Liegevorrichtung befindlichen Person sehr aufwendig aufgebaut sind und hohe Herstellungskosten aufweisen.

Aus WO 2007/042960 A ist eine Liegevorrichtung, die ein Untergestell und einen auf dem Untergestell angeordneten Rahmen aufweist, bekannt, Zwischen dem Rahmen und dem Untergestell sind Sensoreinheiten mit Kraftsensoren angeordnet. Die Vorrichtung weist sehr aufwändig aufgebaute, spezielle Sensoreinheiten zur Bestimmung des Gewichts einer auf der Liegevorrichtung befindlichen Person, auf.

Aus WO 2005/059488 A1 ist eine Wägezelle bekannt, in die ein Neigungsaufnehmer integriert ist. Außerdem ist aus dieser Druckschrift eine Waage mit mindestens einer solchen Wägezelle bekannt, bei der die Abweichung der Messerichtung von der Schwerkraftrichtung erfasst wird.

Aus US 5,173,977 ist ein Bett zum Wiegen von Patienten mit einer Patienten-Tragestruktur bekannt. Das Bett weist zwei Trapez förmige Strukturen auf, an deren Oberseiten Wägezellen montiert sind. Auf die Wägezellen ist die Patienten-Tragestruktur montiert. Eine Neigungsverstellung ist nicht möglich.

Aus US 4,869,266 ist eine Patientenbeobachtungsvorrichtung bekannt, mit der eine Veränderung des Patientengewichies während einer chirurgischen Operation feststellbar ist. Die Vorrichtung weist ein Untergestell auf, das einen Rahmen trägt. Das Untergestell kann mit samt dem Rahmen geneigt werden.

Aus DE 297 03 276 U1 ist ein Kranken-oder Pflegebett bekannt. Das Bett weist ein fahrbares Untergestell und einen darauf über Hebeigestänge und mit Hilfe von Motoren neigungs- und höhenverstellbaren Liegerahmen auf.

Aus WO 2004/021952 ist ein Krankenhausbett bekannt, bei dem in einen Rahmen Wägezellen integriert sind. Mittels einer Hubverstellung kann der Rahmen angehoben oder abgesenkt werden.

Der vorliegenden Erfindung liegt daher die Aufgabe zugrunde, eine Liegevorrichtung der eingangs genannten Art anzugeben, mit der Gewichtsmessungen sicher und mit konstruktiv einfachen und kostengünstigen Mitteln realisierbar sind.

Erfindungsgemäß wird die voranstehende Aufgabe durch eine Liegevorrichtung, die dadurch gekennzeichnet ist, dass zwischen dem Untergestell und dem Rahmen mindestens zwei Plattformwägezellen angeordnet sind und dass der Rahmen an einem anderen Ende und/oder auf einer anderen Traverse mittels eines Lagers - vorzugsweise Loslagers - in Längsrichtung bewegbar gelagert ist.

Erfindungsgemäß ist erkannt worden, dass durch eine geschickte Auswahl der Komponenten einer Liegevorrichtung die voranstehende Aufgabe auf überraschend einfache Weise gelöst wird. Im Konkreten ist als Mosselemant eine Plattformwägezelle ausgewählt, wobei in weiter konkreter Weise mindestens zwei Plattformwägezellen bei der erfindungsgemäßen Liegevorrichtung eingesetzt werden. Derartige Plattformwägezellen sind äußerst robust und vielseitig und in besonderer Weise für die Aufnahme exzentrischer Belastungen geeignet. Verlagerungen des Krafteinleitungspunkts werden durch Plattformwägezellen kompensiert, so dass sehr genaue Messungen möglich sind. Des Weiteren sind Plattformwägezellen preiswert in der Herstellung.

Folglich ist mit der erfindungsgemäßen Liegevorrichtung eine Liegevorrichtung angegeben, mit der Gewichtsmessungen sicher und mit konstruktiv einfachen und kostengünstigen Mitteln realisierbar sind.

In vorteilhafter Weise sind die Plattformwägezellen als Doppelbiegebalken ausgeführt. Eine derartige Bauform bietet eine besonders hohe Messgenauigkeit.

Im Hinblick auf eine besonders komfortable und einfache Messung könnten die Plattformwägezellen eine Einrichtung zur Übermittlung aufgenommener Messsignale oder -daten an eine Zentrale aufweisen. Über eine derartige Zentrale könnte quasi eine Überwachung einer auf der Liegevorrichtung befindlichen Person, insbesondere eines Patienten, erfolgen.

In besonders einfacher Weise könnte die Übermittlung drahtlos, vorzugsweise mittels einer Funkübertragung, beispielsweise mittels Bluetooth, erfolgen. Mit einer derartigen drahtlosen Übermittlung lassen sich störende Kabelverbindungen vermeiden, was insbesondere in einem Krankenhaus- oder Pflegebetrieb besonders vorteilhaft ist.

Im Hinblick auf eine besonders vielseitige Auswertung der durch die Plattformwägezellen aufgenommenen Messsignale oder -daten könnte für jede Plattformwägezelle ein separater Übertragungskanal zur Zentrale realisiert sein. Die so übermittelten Daten könnten unabhängig voneinander oder im Zusammenhang ausgewertet werden.

Im Konkreten könnte mittels der Plattformwägezellen die Position oder Lage einer auf der Liegevorrichtung befindlichen Person relativ zum Rahmen oder zu den Plattformwägezellen bestimmbar und/oder überwachbar sein, wobei dies durch entsprechende Auswertung der Messsignale oder -daten der Plattformwägezellen erfolgen könnte. Dabei könnte letztendlich bestimmt werden, wo genau sich eine Person auf der Liegevorrichtung befindet. Anhand der Intensität der Gewichtsbelastung könnte sogar festgestellt werden, ob eine Person auf der Liegevorrichtung liegt oder etwa sitzt. Im einfachsten Falle könnte festgestellt werden, ob sich eine Person noch auf der Liegevorrichtung befindet oder diese beispielsweise versehentlich durch ein Herunterfallen von der Liegevorrichtung verlassen hat.

In weiter vorteilhafter Weise könnte ein errechneter Schwerpunkt der durch eine auf der Liegevorrichtung befindlichen Person erzeugten Belastung grafisch darstellbar sein, wobei vorzugsweise die Koordinaten des Schwerpunkts auf einen Fixpunkt der Liegevorrichtung bezogen angebbar sind.

Bei einer grafischen Darstellung der Gewichtsbelastung der Liegefläche einer Liegevorrichtung könnte die Liegefläche in verschiedenfarbige Zonen aufgeteilt sein, wobei die Farbe einer aktuellen Schwerpunktzone vorzugsweise von blass über kräftig bis blinkend aktivierbar ist. Dabei könnte eine Aufteilung der Liegefläche in eine grüne, gelbe und rote Zone erfolgen.

Aufgenommene Informationen über den Schwerpunkt, seine Koordinaten, grafische Darstellungen oder Farbintensitäten oder Blinkvorgänge könnten an eine Zentrale, beispielsweise ein Stationszimmer, oder an eine mobile Einheit, beispielsweise an einen PDA oder ein Mobiltelefon, übertragbar sein.

In besonders vorteilhafter Weise könnten Informationen mehrerer Liegevorrichtungen übertragbar und in einer Matrix darstellbar sein. Die Felder der Matrix könnten dabei die Farbe der aktuellen Schwerpunktzone der Liegefläche der jeweiligen Liegevorrichtung aufweisen.

In weiter vorteilhafter Weise könnten ein oder mehrere Alarme in Abhängigkeit vorgebbarer Kriterien auslösbar sein. Derartige Alarme könnten in Stufen und/oder entsprechend den vorgegebenen obigen Farben auslösbar sein. Dabei könnten die Alarme als optische und/oder akustische Signale erzeugbar sein. Des Weiteren könnten die Alarme oder Signale auf Personen und/oder mobile Einheiten übertragbar sein. Die Personen könnten Personensucher in beispielsweise Krankenhäusern sein. Als mobile Einheiten kommen beispielsweise Mobiltelefone oder PDAs in Frage.

Die Übertragung von Signalen oder Daten oder Informationen könnte per Funk, beispielsweise Bluetooth, Kabel oder Licht realisierbar sein.

In weiter vorteilhafter Weise könnte bei Verlassen einer vorgebbaren Position durch eine Person ein optisches oder akustisches Signal erzeugbar sein. Dabei könnte ein derartiges Signal erzeugt werden, wenn sich eine Person beispielsweise nur am Rand oder an einem Kopfende der Liegevorrichtung aufhält und die Person eigentlich mitten auf der Liegevorrichtung liegen sollte. Dies bietet ein hohes Maß an Sicherheit für beispielsweise Patienten, die ihre Position auf der Liegevorrichtung nicht selbst kontrollieren können.

Insbesondere bei Personen oder Patienten, die sich auf der Liegevorrichtung unkontrolliert bewegen und somit ein dynamisches Verhalten zeigen, das zu häufigen Verlagerungen des Krafteinleitungspunkts bei den Gewichtssensoren führt, sind die erfindungsgemäß eingesetzten Plattformwägezellen besonders günstig, da sie zur Kompensierung derartiger Verlagerungen geeignet sind.

Je nach Anforderung können mehrere Plattformwägezellen zwischen dem Untergestell und dem Rahmen angeordnet werden, so dass Messsignale oder -daten von mehreren vorgebbaren Messpunkten zwischen Untergestell und Rahmen durch die Zentrale aufgenommen und ausgewertet werden können. Hierdurch lässt sich eine besonders sichere Überwachung der Position einer Person auf der Liegevorrichtung vornehmen.

Hinsichtlich einer besonders sicheren Auflage des Rahmens auf dem Untergestell könnte das Untergestell zwei Traversen zur Auflage des Rahmens aufweisen. Dabei könnte eine Traverse beispielsweise den Kopfbereich des Rahmens und eine Traverse den Fußbereich des Rahmens abstützen.

Je nach Erfordernis ist es insbesondere bei Verwendung der Liegevorrichtung für Kranke vorteilhaft, den Rahmen und damit eine Liegefläche für einen Patienten in der Neigung verändern zu können. Hierzu könnte das Untergestell in vorteilhafter Weise mindestens eine Hebeeinrichtung zum Anheben mindestens einer Traverse aufweisen. Durch das Anheben der Traverse könnte eine Neigung des Rahmens auf einfache Weise vorgenommen werden.

Bei einer besonders komfortablen Ausgestaltung könnte jeder Traverse eine Hebeeinrichtung zugeordnet sein. Hierdurch ist es ermöglicht, den Rahmen und damit die Liegefläche für einen Patienten in unterschiedliche Richtungen zu neigen.

In konstruktiv besonders einfacher Weise könnte die Hebeeinrichtung einen Hubzylinder aufweisen. Somit könnte jeder Traverse ein Hubzylinder zugeordnet werden.

Hinsichtlich einer besonders vielseitigen Messung beispielsweise des Gewichts einer Person könnten auf jeder Traverse zwei Plattformwägezellen angeordnet sein. Zur Aufspannung einer möglichst großen Messfläche könnte jeweils eine Plattformwägezelle an jeweils einem Ende der Traversen angeordnet sein.

Zur sicheren Realisierung eines Anhebens einer Traverse und damit einer Schrägstellung oder Neigung des Rahmens könnte der Rahmen an einem Ende und/oder auf einer Traverse mittels eines Drehlagers um eine horizontale Achse drehbar gelagert sein. Die horizontale Achse könnte hierbei in Querrichtung der Liegevorrichtung angeordnet sein.

Wie oben beschrieben könnte der Rahmen auf den Wägezellen der einen Traverse drehbar gelagert sein. Bei Durchbiegung des Rahmens oder nicht exakter Montage könnten sich die Drehlager gegeneinander verspannen. Die entstehenden Horizontalkräfte könnten zu Messfehlern bei den Plattformwägezellen führen. Zur Vermeidung derartiger Messfehler könnte das Drehlager elastische Elemente oder Elastomere aufweisen, die als Einlagen in den Drehlagern die Verspannkräfte reduzieren könnten.

Bei einer konkreten Ausgestaltung könnte das Drehlager auf der Plattformwägezelle oder zwischen dem Rahmen und der Plattformwägezelle angeordnet sein. Bei der Wahl der Anordnung ist der jeweilige Anwendungsfall zu berücksichtigen.

Hinsichtlich einer besonders sicheren Schrägstellungsmöglichkeit des Rahmens könnte an beiden Enden der Traverse jeweils ein Drehlager angeordnet sein. Hierdurch ist eine besonders stabile Ausgestaltung der Liegevorrichtung realisiert.

Insbesondere bei der Ausgestaltung der Liegevorrichtung mit neigbarem Rahmen könnte der Rahmen auch an dem einen Ende oder auf der einen Traverse mittels eines Lagers - vorzugsweise Loslagers - in Längsrichtung bewegbar gelagert sein. Hierdurch könnte ein Längenausgleich erfolgen, der bei Schrägstellung des Rahmens erforderlich ist. Mit anderen Worten wird der Rahmen durch das Lager relativ zum Untergestell bewegbar. Dabei führt die Verlagerung des Krafteinleitungspunkts bei der schrägstellung des Rahmens nicht zu Messfehlern, da dieser Einfluss von den Plattformwägezellen kompensiert wird.

Das Lager könnte bei einer besonders einfach ausgestalteten Variante eine Schiene mit mindestens einer darin bewegbaren oder geführten Laufrolle aufweisen. Dabei könnte die Schiene auf der Plattformwägezelle oder zwischen dem Rahmen und der Plattformwägezelle angeordnet oder dem Untergestell zugeordnet sein. Die mindestens eine Laufrolle könnte in diesem Fall am Rahmen gelagert sein.

Bei einer alternativen Ausgestaltung könnte die Schiene am Rahmen angeordnet sein. In diesem Fall könnte die mindestens eine Laufrolle auf der Plattformwägezelle oder zwischen dem Rahmen und der Plattformwägezelle gelagert oder dem Untergestell zugeordnet sein. In jedem Fall ist eine ausreichende Bewegbarkeit des Rahmens relativ zum Untergestell zu realisieren, so dass eine Kompensation während der Neigung oder Schrägstellung des Rahmens erfolgen kann.

Um Querkräfte auf die Plattformwägezellen gering zu halten, könnte die mindestens eine Laufrolle ein reibungsverminderndes Lager oder Wälzlager aufweisen. Hierdurch ist ein möglichst reibungsfreies Abrollen der Laufrollen in den Schienen ermöglicht.

Zur Verminderung von Verspannkräften in Axialrichtung der Laufrollen könnte die mindestens eine Laufrolle eine elastische Lauffläche, vorzugsweise aus einem Elastomer, aufweisen. Im Konkreten könnte die mindestens eine Laufrolle ein Elastomerrad aufweisen, wobei derartige Laufrollen von ihrer Anwendung bei Rollkoffern oder Inlineskates bekannt sind.

Die erfindungsgemäße Liegevorrichtung könnte beispielsweise als Krankenbett verwendet werden. Dabei lässt sich in vorteilhafter Weise die Position eines Patienten über die Position der verwendeten Plattformwägezellen und die zugehörige aufgenommene Gewichtskomponente bestimmen. Hierdurch ist eine sichere Patientenüberwachung möglich. Beispielsweise könnte ein Mikrocontroller mit vier Messeingängen im Bereich der Zentrale verwendet werden. Neben der Position des Patienten kann über die Summierung der Messdaten das Patientengewicht bestimmt werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines Ausführungsbeispiels der erfindungsgemäßen Liegevorrichtung anhand der Zeichnung zu verweisen. In Verbindung mit der Erläuterung des bevorzugten Ausführungsbeispiels der erfindungsgemäßen Liegevorrichtung anhand der Zeichnung werden auch im Allgemeinen bevorzugte Ausgestaltungen und Weiterbildungen der Lehre erläutert. In der Zeichnung zeigen
- Fig. 1: in einer perspektivischen Ansicht und darunter in einer Seitenansicht, schematisch, ein Ausführungsbeispiel einer erfindungsgemäßen Liegevorrichtung,
- Fig. 2: in einer vergrößerten Darstellung das Drehlager der Liegevorrichtung aus Fig. 1 als Detail A und darunter in einer teilweise geschnittenen und vergrößerten Darstellung dieses Drehlager und
- Fig. 3: in einer vergrößerten Darstellung das Loslager der Liegevorrichtung aus Fig. 1 als Detail B und darunter in einer teilweise geschnittenen und vergrößerten Darstellung dieses Loslager.

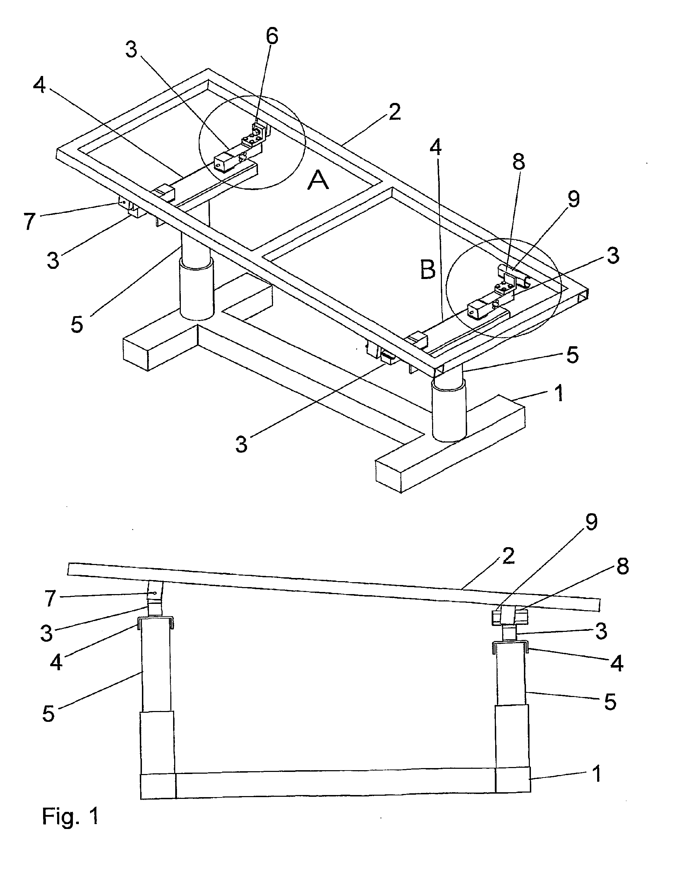

Fig. 1 zeigt in einer perspektivischen Ansicht im oberen Teil der Fig. 1 und darunter in einer Seitenansicht, schematisch, ein Ausführungsbeispiel einer erfindungsgemäßen Liegevorrichtung. Die Liegevorrichtung kann als Bett in einem Krankenhaus dienen und weist ein Untergestell 1 und einen auf dem Untergestell 1 angeordneten Rahmen 2 auf. Im Hinblick auf sichere und mit konstruktiv einfachen und kostengünstigen Mitteln realisierbare Gewichtsmessungen einer auf der Liegevorrichtung befindlichen Person ist die Liegevorrichtung derart ausgestaltet, dass zwischen dem Untergestell 1 und dem Rahmen 2 mindestens zwei Plattformwägezellen 3 angeordnet sind.

Die Plattformwägezellen 3 sind als Doppelbiegebalken ausgeführt und sind insbesondere für die Aufnahme exzentrischer Belastungen sehr geeignet. Verlagerungen des Krafteinleitungspunkts während einer Neigung des Rahmens 2 oder während einer Bewegung der auf der Liegevorrichtung befindlichen Person werden einfach kompensiert. Darüber hinaus bietet diese Bauform eine sehr hohe Messgenauigkeit.

Die Plattformwägezellen 3 weisen eine hier nicht gezeigte Einrichtung zur Übermittlung aufgenommener Messsignale oder -daten an eine Zentrale auf. Die Übermittlung der Messsignale oder -daten erfolgt drahtlos mittels einer Bluetooth-Verbindung. Im Hinblick auf eine besonders vielseitige Gewichtsmessung ist für jede Plattformwägezelle 3 ein separater Übertragungskanal zur Zentrale realisiert. Damit ist mittels der Plattformwägezellen 3 die Position einer auf der Liegevorrichtung befindlichen Person relativ zum Rahmen 2 oder zu den Plattformwägezellen 3 einfach und sicher bestimmbar.

Das Untergestell 1 weist zur sicheren Auflage des Rahmens 2 zwei Traversen 4 im oberen und unteren Teil der Liegevorrichtung auf. Zur beliebigen Neigung des Rahmens 2 weist das Untergestell 1 zwei Hebeeinrichtungen 5 in Form von Hubzylindern zum Anheben der Traversen 4 auf. Dabei ist jeder Traverse 4 eine Hebeeinrichtung 5 zugeordnet.

Auf jeder Traverse 4 sind zwei Plattformwägezellen 3 jeweils an den Enden der Traversen 4 angeordnet.

An den Enden der Traversen 4 sind Lagereinrichtungen realisiert, die ein Neigen des Rahmens 2 relativ zum Untergestell 1 sicher und spannungsfrei ermöglichen.

Im Konkreten ist der Rahmen 2 an einem Ende mittels eines Drehlagers 6 um eine horizontale Achse 7 drehbar gelagert. Dabei ist der Rahmen 2 relativ zur Traverse 4 und auch zu den Plattformwägezellen 3 drehbar. An beiden Enden der Traverse 4 ist jeweils ein solches Drehlager 6 angeordnet. Dieses Drehlager 6 ist in Fig. 1 in dem Kreis A dargestellt.

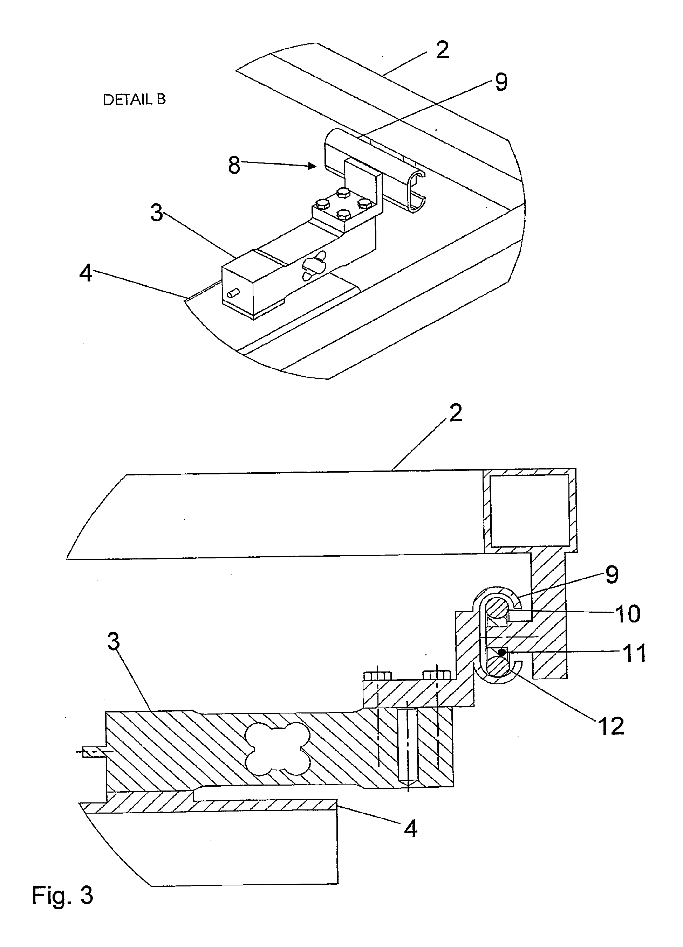

An der anderen Traverse 4 bzw. am anderen Ende der Liegevorrichtung ist der Rahmen 2 mittels eines Lagers 8 in Längsrichtung bewegbar gelagert. Das Lager 8 ist dabei als Loslager ausgebildet, das eine Bewegbarkeit in einer Raumrichtung und eine Fixierung in den anderen beiden Raumrichtungen ermöglicht. Das Lager 8 weist eine Schiene 9 zur Führung einer Laufrolle 10 auf, die in Fig. 3 gezeigt ist. Das Lager 8 ist in Fig. 1 in dem Kreis B gezeigt.

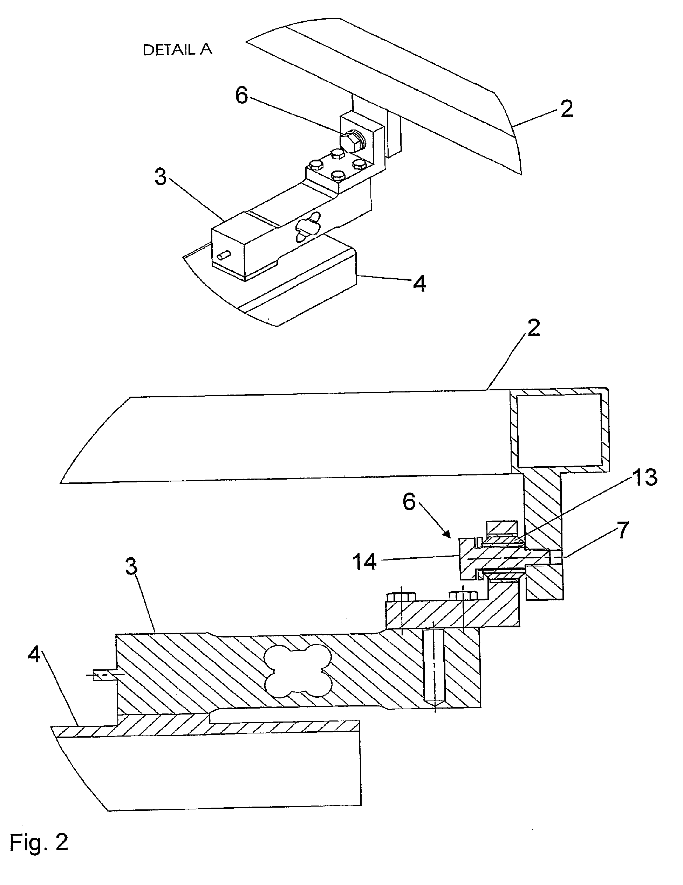

Fig. 2 zeigt in einer vergrößerten Darstellung das Drehlager 6 der Liegevorrichtung aus Fig. 1 als Detail A und darunter in einer teilweise geschnittenen und vergrößerten Darstellung dieses Drehlager 6. Das Drehlager 6 ermöglicht eine Verschwenkung des Rahmens 2 relativ zur Plattformwägezelle 3 und zur Traverse 4 um eine horizontale Achse 7.

Fig. 3 zeigt in einer vergrößerten Darstellung das als Loslager ausgebildete Lager 8 der Liegevorrichtung aus Fig. 1 als Detail B und darunter in einer teilweise geschnittenen und vergrößerten Darstellung dieses Lager 8. Das Lager 8 weist eine Schiene 9 und eine darin geführte Laufrolle 10 auf. Hierdurch ist eine Verschiebung des Rahmens 2 relativ zum Untergestell 1 bzw. zur Traverse 4 und zur Plattformwägezelle 3 in Längsrichtung der Liegevorrichtung möglich.

Die Laufrolle 10 weist ein reibungsverminderndes Wälzlager 11 auf, um eine Beeinflussung der Gewichtsmessung durch die Lagerbewegungen möglichst gering zu halten. Des Weiteren weist die Laufrolle 10 eine elastische Lauffläche 12 auf, um gegebenenfalls horizontale Bewegungen des Rahmens 2 zu kompensieren. Die Laufrolle 10 könnte einen Elastomerreifen aufweisen, wie er bei Rollkoffern oder Inlineskates bekannt ist.

Das Drehlager 6 weist gemäß Fig. 2 elastische Elemente 13 zur Kompensierung von Verspannungen auf. Bei dem hier gezeigten Ausführungsbeispiel ist im Konkreten eine Elastomerhülse um eine Schraube 14 angeordnet, um eine einfache Drehung des Rahmens 2 relativ zur Traverse 4 zu ermöglichen.

Hinsichtlich weiterer vorteilhafter Ausgestaltungen der erfindungsgemäßen Liegevorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Liegevorrichtung lediglich zur Erörterung der beanspruchten Lehre dient, diese jedoch nicht auf das Ausführungsbeispiel einschränkt.

### Bezugszeichenliste

- 1: Untergestell
- 2: Rahmen
- 3: Plattformwägezelle
- 4: Traverse
- 5: Hebeeinrichtung
- 6: Drehlager
- 7: horizontale Achse
- 8: Lager
- 9: Schiene
- 10: Laufrolle
- 11: Wälzlager
- 12: Lauffläche
- 13: elastisches Element
- 14: Schraube

## Patentansprüche

1. Liegevorrichtung, insbesondere Bett oder Liege, mit einem Untergestell (1) und einem auf dem Untergestell (1) angeordneten Rahmen (2), welcher an einem Ende und/oder auf einer Traverse (4) mittels eines Drehlagers (6) um eine horizontale Achse (7) drehbar gelagert Ist, **dadurch gekennzeichnet, dass** zwischen dem Untergestell (1) und dem Rahmen (2) mindestens zwei Plattformwägezellen (3) angeordnet sind und dass der Rahmen (2) an einem anderen Ende und/oder auf einer anderen Traverse (4) mittels eines Lagers (8) - vorzugsweise Loslagers - in Längsrichtung bewegbar gelagert ist.

2. Vorrichtung nach Anspruch 1, **dadurch gekennzeichnet, dass** die Plattformwagezellen (3) als Doppelbiegebalken ausgeführt sind.

3. Vorrichtung nach Anspruch 1 oder 2, **dadurch gekennzeichnet, dass** die Vorrichtung (3) eine Einrichtung zur Übermittlung aufgenommener Messsignale oder -daten an eine Zentrale aufweist und/oder dass die Übermittlung drahtlos, vorzugsweise mittels einer Funkübertragung, erfolgt und/oder dass für jede Plattformwägezelle (3) ein separater Übertragungskanal zur Zentrale realisiert ist.

4. Vorrichtung nach einem der Ansprüche 1 bis 3, **dadurch gekennzeichnet, dass** mittels der Plattformwägezellen (3) die Position oder Lage einer auf der Liegevorrichtung befindlichen Person relativ zum Rahmen (2) oder zu den Plattformwägezellen (3) bestimmbar und/oder überwachbar ist.

5. Vorrichtung nach einem der Ansprüche 1 bis 4, **dadurch gekennzeichnet, dass** ein errechneter Schwerpunkt der durch eine auf der Liegevorrichtung befindlichen Person erzeugten Belastung grafisch darstellbar ist, wobei vorzugsweise die Koordinaten des Schwerpunkts auf einen Fixpunkt der Liegevorrichtung bezogen angebbar sind.

6. Vorrichtung nach einem der Ansprüche 1 bis 5, **dadurch gekennzeichnet, dass** eine Liegefläche der Liegevorrichtung in verschiedenfarbige Zonen aufgeteilt ist, wobei die Farbe einer aktuellen Schwerpunktzone vorzugsweise von blass über kräftig bis blinkend aktivierbar ist.

7. Vorrichtung nach Anspruch 5 oder 6, **dadurch gekennzeichnet, dass** Informationen über den Schwerpunkt, seine Koordinaten, grafische Darstellungen oder Farbintensitäten oder Blinkvorgänge an eine Zentrale oder an eine mobile Einheit übertragbar sind.

8. Vorrichtung nach einem der Ansprüche 1 bis 7, **dadurch gekennzeichnet, dass** Informationen mehrerer Liegevorrichtungen übertragbar und in einer Matrix darstellbar sind oder dass Informationen mehrerer Liegevorrichtungen übertragbar und in einer Matrix darstellbar sind, wobei Felder der Matrix die Farbe der aktuellen Schwerpunktzone der Liegefläche der jeweiligen Liegevorrichtung aufweisen.

9. Vorrichtung nach einem der Ansprüche 1 bis 8, **dadurch gekennzeichnet, dass** ein oder mehrere Alarme in Abhängigkeit vorgebbarer Kriterien auslösbar sind.

10. Vorrichtung nach einem der Ansprüche 4 bis 9, **dadurch gekennzeichnet, dass** bei Verlassen einer vorgebbaren Position durch eine Person ein optisches oder akustisches Signal erzeugbar ist.

11. Vorrichtung nach einem der Ansprüche 1 bis 10, **dadurch gekennzeichnet, dass** das Untergestell (1) zwei Traversen (4) zur Auflage des Rahmens (2) aufweist und/oder dass das Untergestell (1) mindestens eine Hebeeinrichtung (5) zum Anheben mindestens einer Traverse (4) aufweist.

12. Vorrichtung nach einem der Ansprüche 1 bis 11, **dadurch gekennzeichnet, dass** der Rahmen (2) an dem einem Ende und/oder auf der einen Traverse (4) mittels eines Lagers (8) - vorzugsweise Loslagers - in Längsrichtung bewegbar gelagert ist.

13. Vorrichtung nach einem der Ansprüche 1 bis 12, **dadurch gekennzeichnet, dass** das Lager (8) eine Schiene (9) mit mindestens einer darin bewegbaren oder geführten Laufrolle (10) aufweist.

14. Vorrichtung nach Anspruch 13, **dadurch gekennzeichnet, dass** die Schiene (9) auf der Plattformwägezelle (3) oder zwischen dem Rahmen (2) und der Plattformwägezelle (3) angeordnet oder dem Untergestell (1) zugeordnet ist und/oder dass die mindestens eine Laufrolle (10) am Rahmen (2) gelagert ist und/oder dass die Schiene (9) am Rahmen (2) angeordnet ist und/oder dass die mindestens eine Laufrolle (10) auf der Plattformwägezelle (3) oder zwischen dem Rahmen (2) und der Plattformwägezelle (3) gelagert oder dem Untergestell (1) zugeordnet ist und/oder dass die mindestens eine Laufrolle (10) ein reibungsvermindemdes Lager oder Wälzlager (11) aufweiset und/oder dass die mindestens eine Laufrolle (10) eine elastische Lauffläche (12), vorzugsweise aus einem Elastomer, aufweist.

15. Vorrichtung nach einem der Ansprüche 1 bis 14, **dadurch gekennzeichnet, dass** das Drehlager auf einer der Plattformwägezellen oder zwischen dem Rahmen und einer der Plattformwägezellen angeordnet ist.

## Claims

1. Apparatus for lying on, in particular a bed or couch, having a base frame (1) and a frame (2), which is arranged on the base frame (1) and which is mounted at one end and/or on one crossmember (4) such that it can be rotated about a horizontal axis (7) by means of a rotary bearing (6), **characterized in that** at least two platform load cells (3) are arranged between the base frame (1) and the frame (2), and **in that** the frame (2) is mounted at another end and/or on another crossmember (4) such that it can be moved in a longitudinal direction by means of a bearing (8)-preferably a movable bearing.

2. Apparatus according to Claim 1, **characterized in that** the platform load cells (3) are configured in the form of double bending beams.

3. Apparatus according to Claim 1 or 2, **characterized in that** the apparatus (3) has a device for transmitting picked-up measurement signals or data to a control centre, and/or **in that** transmission takes place wirelessly, preferably by means of radio transmission, and/or **in that** a separate transmission channel to the control centre is realized for each platform load cell (3).

4. Apparatus according to one of Claims 1 to 3, **characterized in that** the platform load cells (3) can be used to determine and/or monitor, relative to the frame (2) or to the platform load cells (3), the position of a person located on the apparatus.

5. Apparatus according to one of Claims 1 to 4, **characterized in that** a centre of gravity calculated for the loading generated by a person located on the apparatus can be represented graphically, wherein preferably the co-ordinates of the centre of gravity can be indicated in relation to a fixed point of the apparatus.

6. Apparatus according to one of Claims 1 to 5, **characterized in that** a lying surface of the apparatus is divided up into different-coloured zones, wherein the colour of a current centre-of-gravity zone can be activated preferably from a pale, via a strong, to a flashing state.

7. Apparatus according to Claim 5 or 6, **characterized in that** information relating to the centre of gravity, the co-ordinates thereof, graphic representations or colour intensities or flashing operations can be transmitted to a control centre or to a mobile unit.

8. Apparatus according to one of Claims 1 to 7, **characterized in that** information relating to a number of apparatuses can be transmitted and represented in a matrix or **in that** information relating to a number of apparatuses can be transmitted and represented in a matrix, wherein fields of the matrix have the colour of the current centre-of-gravity zone of the lying surface of the respective apparatus.

9. Apparatus according to one of Claims 1 to 8, **characterized in that** one or more alarms can be triggered in dependence on predeterminable criteria.

10. Apparatus according to one of Claims 4 to 9, **characterized in that** an optical or acoustic signal can be generated when a person leaves a predeterminable position.

11. Apparatus according to one of Claims 1 to 10, **characterized in that** the base frame (1) has two crossmembers (4) for bearing the frame (2), and/or **in that** the base frame (1) has at least one lifting device (5) for raising at least one crossmember (4).

12. Apparatus according to one of Claims 1 to 11, **characterized in that** the frame (2) is mounted at the one end, and/or on the one crossmember (4), such that it can be moved in the longitudinal direction by means of a bearing (8) - preferably a movable bearing.

13. Apparatus according to one of Claims 1 to 12, **characterized in that** the bearing (8) has a rail (9) with at least one roller (10) which can be moved, or is guided, therein.

14. Apparatus according to Claim 13, **characterized in that** the rail (9) is arranged on the platform load cell (3) or between the frame (2) and the platform load cell (3) or is assigned to the base frame (1), and/or **in that** the at least one roller (10) is mounted on the frame (2), and/or **in that** the rail (9) is arranged on the frame (2), and/or **in that** the at least one roller (10) is mounted on the platform load cell (3) or between the frame (2) and the platform load cell (3) or is assigned to the base frame (1), and/or **in that** the at least one roller (10) has a friction-reducing bearing or rolling-contact bearing (11), and/or **in that** the at least one roller (10) has an elastic running surface (12), preferably made of an elastomer.

15. Apparatus according to one of Claims 1 to 14, **characterized in that** the rotary bearing is arranged on one of the platform load cells or between the frame and one of the platform load cells.

## Revendications

1. Dispositif d'allongement, notamment lit ou couchette, comprenant un bâti (1) et un cadre (2) disposé sur le bâti (1), lequel est supporté à une extrémité et/ou sur une traverse (4) au moyen d'un palier de pivotement (6) de manière à pouvoir pivoter autour d'un axe horizontal (7), **caractérisé en ce qu'**au moins deux cellules de pesée à plate-forme (3) sont disposées entre le bâti (1) et le cadre (2) et **en ce que** le cadre (2) est supporté à une autre extrémité et/ou sur une autre traverse (4) au moyen d'un palier (8), de préférence un palier libre, de manière à être mobile dans le sens longitudinal.

2. Dispositif selon la revendication 1, **caractérisé en ce que** les cellules de pesée à plate-forme (3) sont réalisées sous la forme de doubles barres flexibles.

3. Dispositif selon la revendication 1 ou 2, **caractérisé en ce que** le dispositif (3) présente un appareil pour la transmission de signaux ou de données de mesure enregistrées à une centrale et/ou **en ce que** la transmission s'effectue sans fil, de préférence au moyen d'une transmission radioélectrique, et/ou **en ce qu'**un canal de transmission séparé vers la centrale est réalisé pour chaque cellule de pesée à plate-forme (3).

4. Dispositif selon l'une des revendications 1 à 3, **caractérisé en ce que** la position ou la posture d'une personne qui se trouve sur le dispositif d'allongement par rapport au cadre (2) ou aux cellules de pesée à plate-forme (3) peut être déterminée et/ou surveillée à l'aide des cellules de pesée à plate-forme (3).

5. Dispositif selon l'une des revendications 1 à 4, **caractérisé en ce qu'**un centre de gravité calculé de la charge produite par une personne qui se trouve sur le dispositif d'allongement peut être représenté sous forme graphique, les coordonnées du centre de gravité pouvant de préférence être indiquées en référence à un point fixe du dispositif d'allongement.

6. Dispositif selon l'une des revendications 1 à 5, **caractérisé en ce qu'**une surface d'allongement du dispositif d'allongement est divisée en zones de différentes couleurs, la couleur d'une zone de centre de gravité actuelle pouvant être activée de préférence de pâle à clignotant en passant par foncé.

7. Dispositif selon la revendication 5 ou 6, **caractérisé en ce que** des informations sur le centre de gravité, ses coordonnées, des représentations graphiques ou des intensités de couleur ou des phénomènes de clignotement peuvent être transmis à une centrale ou à une unité mobile.

8. Dispositif selon l'une des revendications 1 à 7, **caractérisé en ce que** des informations de plusieurs dispositifs d'allongement peuvent être transmises et représentées dans une matrice ou **en ce que** des informations de plusieurs dispositifs d'allongement peuvent être transmises et représentées dans une matrice, des champs de la matrice présentant la couleur de la zone de centre de gravité actuelle de la surface d'allongement du dispositif d'allongement correspondant.

9. Dispositif selon l'une des revendications 1 à 8, **caractérisé en ce qu'**une ou plusieurs alarmes peuvent être déclenchées en fonction de critères pouvant être prédéfinis.

10. Dispositif selon l'une des revendications 4 à 9, **caractérisé en ce qu'**un signal sonore ou visuel peut être produit lorsqu'une personne quitte une position pouvant être prédéfinie.

11. Dispositif selon l'une des revendications 1 à 10, **caractérisé en ce que** le bâti (1) présente deux traverses (4) pour déposer le cadre (2) et/ou **en ce que** le bâti (1) présente au moins un appareil de levage (5) pour soulever au moins une traverse (4).

12. Dispositif selon l'une des revendications 1 à 11, **caractérisé en ce que** le cadre (2) est supporté à l'extrémité et/ou sur la traverse (4) au moyen d'un palier (8), de préférence un palier libre, de manière à être mobile dans le sens longitudinal.

13. Dispositif selon l'une des revendications 1 à 12, **caractérisé en ce que** le palier (8) présente un rail (9) muni d'au moins un galet de roulement (10) qui est mobile ou qui est guidé dans celui-ci.

14. Dispositif selon la revendication 13, **caractérisé en ce que** le rail (9) est disposé sur la cellule de pesée à plate-forme (3) ou entre le cadre (2) et la cellule de pesée à plate-forme (3) ou est associé au bâti (1) et/ou **en ce que** l'au moins un galet de roulement (10) est supporté sur le cadre (2) et/ou en ce que le rail (9) est disposé sur le cadre (2) et/ou **en ce que** l'au moins un galet de roulement (10) est supporté sur la cellule de pesée à plate-forme (3) ou entre le cadre (2) et la cellule de pesée à plate-forme (3) ou est associé au bâti (1) et/ou **en ce que** l'au moins un galet de roulement (10) présente un palier réduisant la friction ou un palier à roulement (11) et/ou **en ce que** l'au moins un galet de roulement (10) présente une surface de roulement élastique (12), de préférence constituée d'un élastomère.

15. Dispositif selon l'une des revendications 1 à 14, **caractérisé en ce que** le palier de pivotement est disposé sur l'une des cellules de pesée à plate-forme ou entre le cadre et l'une des cellules de pesée à plate-forme.
